(19) Europäisches Patentamt
European Patent Office
Office européen des brevets

(11) **EP 1 958 003 B1**

(12) **EUROPÄISCHE PATENTSCHRIFT**

(45) Veröffentlichungstag und Bekanntmachung des Hinweises auf die Patenterteilung:
**08.08.2012 Patentblatt 2012/32**

(51) Int Cl.:
*G01S 17/10* $^{(2006.01)}$   *G01S 17/32* $^{(2006.01)}$
*G01S 13/38* $^{(2006.01)}$   *G01S 17/36* $^{(2006.01)}$

(21) Anmeldenummer: **06818491.0**

(22) Anmeldetag: **13.11.2006**

(86) Internationale Anmeldenummer:
**PCT/EP2006/010843**

(87) Internationale Veröffentlichungsnummer:
**WO 2007/065528 (14.06.2007 Gazette 2007/24)**

(54) **VERFAHREN ZUR MEHRZIELFÄHIGEN AUFLÖSUNG EINER PHASENMEHRDEUTIGKEIT**

METHOD FOR MULTI-TARGET-ENABLED RESOLUTION OF PHASE AMBIGUITY

PROCEDE POUR LA RESOLUTION MULTICIBLE D'UNE AMBIGUITE DE PHASE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **05.12.2005 EP 05111695**

(43) Veröffentlichungstag der Anmeldung:
**20.08.2008 Patentblatt 2008/34**

(73) Patentinhaber: **Leica Geosystems AG**
**9435 Heerbrugg (CH)**

(72) Erfinder: **SEEGER, Stephan**
**CH-9435 Heerbrugg (CH)**

(74) Vertreter: **Kaminski Harmann**
**Patentanwälte AG**
**Landstrasse 124**
**9490 Vaduz (LI)**

(56) Entgegenhaltungen:
**EP-A- 1 450 128     US-A- 3 652 161**
**US-A- 4 537 502     US-A- 4 768 877**

• **MUSCH T ET AL: "A multiple target high precision laser range measurement system based on the FMCW concept" MICROWAVE CONFERENCE, 2003. 33RD EUROPEAN 7-9 OCT. 2003, PISCATAWAY, NJ, USA,IEEE, Bd. 3, 7. Oktober 2003 (2003-10-07), Seiten 991-994, XP010680818 ISBN: 1-58053-835-5 in der Anmeldung erwähnt**

**Beschreibung**

Die Erfindung betrifft ein Verfahren zur mehrzielfähigen Auflösung einer Phasenmehrdeutigkeit nach Anspruch 1, ein Computerprogrammprodukt sowie einen Distanzmesser nach dem Oberbegriff des Anspruchs 16.

Im Bereich der berührungslosen Distanzmessung sind verschiedene Messprinzipien und -verfahren bekannt, die beispielsweise in den Fachbüchern "J. M. Rüeger: Electronic Distance Measurement, 4th Edition; Springer, Berlin, 1996" und "R. Joeckel & M. Stober: Elektronische Entfernungs- und Richtungsmessung, 4. Auflage; Verlag Konrad Wittwer, Stuttgart, 1999" dargestellt sind. Handelsübliche elektrooptische Distanzmessgeräte arbeiten vornehmlich nach dem Prinzip der Phasenmessung oder dem der Impuls-Laufzeitmessung; siehe z.B. Joeckel & Stober, Kapitel 13.

Die Arbeitsweise dieser Geräte besteht darin, modulierte elektromagnetische Strahlung, z.B. intensitätsmoduliertes Licht, auf die zu vermessenden Ziele auszusenden und nachfolgend ein oder mehrere Echos von den rückstreuenden Objekten, bei denen es sich idealerweise ausschliesslich um die zu vermessenden Ziele handelt, zu empfangen. Die Signalauswertung der empfangenen Echos ist eine technische Standardaufgabe, für die eine Vielzahl von Lösungen, insbesondere auch unter Verwendung von optischen Systemen, realisiert wurde.

Phasenmessende Systeme müssen das Problem der Phasenmehrdeutigkeit lösen. Die von einem Phasenmesser gemessene Phase bzw. Phasenverschiebung ist nicht eindeutig, da Distanzen, die sich um ganzzahlige Vielfache der Wellenlänge unterscheiden, zur Messung einer identischen Phase führen. Zur Auflösung der Phasenmehrdeutigkeit werden zumeist mehrere Messungen mit unterschiedlichen Trägerwellenlängen verwendet. Aus den gemessenen Phasenverschiebungen wird dann die Entfernung bestimmt.

Für viele Anwendungen, insbesondere in Geodäsie und Bauindustrie, haben sich in den letzten Jahren immer mehr Tachymeter oder andere Geräte durchgesetzt, die mit reflektorlos messenden Distanzmessern nach dem Phasenmessprinzip ausgerüstet sind.

Die reflektorlose Distanzmessung führt oft zu Situationen, in denen der vom Entfernungsmesser emittierte Messstrahl gleichzeitig mehrere Objekte anstrahlt, bei denen es sich nicht immer um Zielobjekte handeln muss. Das passiert z.B. bei der Vermessung einer Kante; wird sie angemessen, so trifft ein Teil des Strahls das eigentlich zu vermessende Zielobjekt mit der Kante, während ein anderer Teil des Strahls ein dahinter liegendes Objekt oder den Boden beleuchtet. Ein weiteres Beispiel ist ein Retroreflektor, der sich in der Nähe eines schwach reflektierenden Zielobjektes befindet und Streulicht in den Empfänger des Distanzmessers leitet. Ähnliches passiert, wenn unbeabsichtigt und oft auch unbemerkt Objekte zwischen dem eigentlichen Messobjekt und dem Instrument angestrahlt werden, beispielsweise bei Distanzmessungen durch Fensterscheiben, Baumgeäst oder Drahtzäune hindurch.

In derartigen Mehrfachziel-Situationen liefert ein herkömmlicher Phasenmesser, der eine einzige Distanz ausgibt, zumeist eine Falschmessung, d.h. einen Distanzmesswert, der mit einem Fehler behaftet ist, der weit ausserhalb der spezifizierten Messgenauigkeit liegt. Laufzeitmesser können Mehrfachziel-Situationen leichter erkennen und handhaben, sofern die Ziele so weit voneinander entfernt sind bzw. die Sendeimpulse kurzzeitig genug sind, dass deren Echos detektiert und auseinandergehalten werden können.

Trotz der Vorteile von Laufzeitmessern sind die meisten gebräuchlichen Tachymeter mit Phasenmessern ausgerüstet, weil sie nur so die geforderte Distanzmessgenauigkeit im mm- oder gar Sub-mm-Bereich mit einem für feldtaugliche Anwendungen vertretbarem Aufwand erreichen können. Die Zuverlässigkeit dieser Geräte wird substantiell erhöht, wenn ihre Phasenmesser mehrzielfähig sind.

So ist beispielsweise aus der WO 2004/074773 bzw. der EP 1 450 128 ein mehrzielfähiges hybrides System zur Ableitung von geodätischen Entfernungsinformationen bekannt, bei dem ein Lichtsignal auf ein oder mehrere Ziele ausgesendet wird. Dabei werden Gerätekomponenten wie Sender und Empfänger zusammen mit den Zielen als ein lineares zeitinvariantes System modelliert, das durch ein Signal angeregt und dessen Systemantwort aufgenommen wird. Im Gegensatz zu reinen Laufzeit- oder Phasenmessern wird die Entfernungsinformation sowohl aus der zeitlichen Verschiebung als auch aus der Signalform der Systemantwort abgeleitet.

Aus der US 4,537,502 ist ein Verfahren zur Entfernungsbestimmung für einzelne Ziele mittels der Aussendung von Strahlung mit einer Mehrzahl von diskreten Frequenzen bekannt. Für die von dem Ziel reflektierte Strahlung wird die Phasenverschiebung ermittelt. Das für die Messung relevante Mehrdeutigkeitsintervall wird in Distanzen repräsentierende Zellen mit zugeordneten Zählern unterteilt und die Zähler der zu den Mehrdeutigkeiten der Phasenverschiebung korrespondierenden Zellen inkrementiert. Die für das einzelne Ziel zu messende Distanz wird anhand der Zelle mit dem höchsten Zählerstand bestimmt.

In der europäischen Patentanmeldung mit der Anmeldenummer 05107764.2 bzw. der internationalen PCT-Anmeldung mit der Anmeldenummer PCT/EP2006/008184 wird ein mehrzielfähiges Distanzmessverfahren nach dem reinen Phasenmessprinzip mit einem zeitlich getrennten Aussenden von periodischen Signalen und einem Abtasten empfangener Signale, in dem Distanzen zu mehreren Zielen simultan bestimmt werden. Hierbei wird ein auf einem mathematischen Signalmodell basierendes statistisches Parameterschätzproblem so gelöst, dass die Zahl der Ziele für mehr als ein Ziel vorgegeben oder grundsätzlich die Zielanzahl durch das Verfahren bestimmt wird. In dieser Anmeldung wird zudem ein Ansatz zur Zerlegung der empfangenen Signale in die den jeweiligen Zielen zuordnbaren Einzelphasen

beschrieben. Dieses Distanzmessverfahren ist jedoch komplex und beruht auf der Lösung eines hochdimensionalen Parameterschätz- bzw. Optimierungsproblems.

Damit stellt sich als ein wesentlicher Nachteil aller bisher bekannten Distanzmessprinzipien die technisch nicht oder nur mit grossem Aufwand, z.B. in Hybridsystemen, realisierte Mehrzielfähigkeit für Phasenmesser oder ein ungünstiges Laufzeitverhalten bzw. eine hohe Komplexität des Algorithmus heraus, wobei wiederum nur Phasenmesser die für viele Anwendungen erforderliche Genauigkeit mit vertretbarem Aufwand bereitstellen.

Die Aufgabe der vorliegenden Erfindung besteht somit in der Bereitstellung eines schnelleren bzw. vereinfachten mehrzielfähigen Verfahrens zur Auflösung einer Phasenmehrdeutigkeit bzw. zur Phasenmessung.

Eine weitere Aufgabe der Erfindung besteht darin, eine solches Messverfahren bereitzustellen, das sich zudem sehr robust gegenüber Rauschen und Messfehlern in den gemessenen Phasenwerten verhält.

Eine weitere Aufgabe der Erfindung besteht darin, eine korrekte Auflösung der Phasenmehrdeutigkeit bei Mehrfachzielen zu ermöglichen, bei denen eine Zuordnung der Phasenmesswerte zu den einzelnen Zielen nicht notwendig vorgegeben ist. Hierbei soll die Auswertung insbesondere auch ein günstiges Laufzeitverhalten aufweisen.

Diese Aufgaben werden erfindungsgemäss durch die Gegenstände der Ansprüche 1 bzw. 16 oder der abhängigen Ansprüche gelöst bzw. die Lösungen fortgebildet.

Zur Distanzmessung wird eine signaltragende Strahlung erzeugt und in Richtung auf ein hinsichtlich der Distanz zu vermessendes Zielobjekt emittiert. Als signaltragende Strahlung kann beispielsweise elektromagnetische Strahlung, wie z.B. Laserlicht, Verwendung finden, aber auch für mechanische Wellen, z.B. Schallwellen, ist das erfindungsgemässe Verfahren geeignet. Die vom Zielobjekt zurückgestreute Strahlung bzw. Welle wird empfangen, elektronisch verarbeitet und ausgewertet. Dabei kann für elektromagnetische Strahlung die Wellenlänge sowohl im sichtbaren, als auch ausserhalb des sichtbaren Bereichs, z.B. im Radarbereich, liegen.

Das erfindungsgemässe Verfahren erlaubt die Bestimmung der Entfernung zu $M$ - eventuell hintereinander liegenden Zielen, wobei $M$ nach oben grundsätzlich unbeschränkt ist, mittels auf beliebige Art bestimmten Phasenwerten $\varphi_{ij} \in [0,2\pi]$, die zu J unterschiedlichen Wellenlängen $\lambda_j$, $1 \leq j \leq J$ korrespondieren und die nicht notwendig den einzelnen Zielen zugeordnet sein müssen, d.h. $\varphi_{ij}$ korrespondiert nicht zwangsläufig mit Ziel $i$, wobei $i = 1..M$.

Für die Beziehung zwischen der Entfernung $R_i$ zu Ziel i mit $i=1..M$ und den Zielen richtig zugeordneten Phasenwerten $\varphi_{ij}$ gilt

$$2R_i = \frac{\varphi_{ij}}{2\pi}\lambda_j + \dot{N}_{ij}\lambda_j + \varepsilon_{ij}, \quad i=1,\dots,M \ ; \ j=1,\dots,J \tag{1}$$

mit unbekannten ganzzahligen Werten $N_{ij}$ und unbekannten Rauschgrössen $\varepsilon_{ij}$, die aus Messfehlern in den Phasen $\varphi_{ij}$ bzw. aus Messfehlern in den Grössen, aus denen die Phasen $\varphi_{ij}$ abgeleitet werden, resultieren. Der Faktor 2 vor $R_i$ berücksichtigt, dass das Signal einmal den Weg vom Sensor zum Ziel zurücklegt und nach Reflektion den gleichen Weg noch einmal zurück zum Sensor.

Im Folgenden wird das Verfahren rein exemplarisch für den Fall elektromagnetischer Strahlung erläutert. Hierbei wird die zu emittierende Strahlung bei oder nach der Erzeugung mit wenigstens zwei Wellenlängen $\lambda_j$ moduliert. Befindet sich das Zielobjekt ausserhalb einer Entfernung, welche die größte der aufmodulierten Wellenlängen überschreitet, so kann aus der Messung einer einzigen Phase $\varphi$ allein keine eindeutige Distanz mehr ermittelt werden, da die absolute Phase als Distanzäquivalent so nur bis auf ein Vielfaches der Wellenlänge bestimmbar ist.

Zur Lösung dieser Phasenmehrdeutigkeit wird das mögliche bzw. zu erwartende Mehrdeutigkeitsintervall diskretisiert, indem es in Zellen einer definierten Breite aufgeteilt wird. Das Mehrdeutigkeitsintervall kann dabei einfach mit der maximal messbaren Distanz gleichgesetzt oder aber auch durch Vorabmessungen oder Schätzungen eingeschränkt werden.

Die Breite der Zellen kann beispielsweise in Abhängigkeit einer vorgegebenen Messgenauigkeit gewählt werden. Zudem wird jeder Zelle ein Zähler zugeordnet. Die algorithmische Auflösung der Phasenmehrdeutigkeit für eine gemessene Phase $\varphi_j$ erfolgt, indem der Zählerstand eines Zählers für die Zellen verändert wird, welche einer Distanz $R_N(\varphi_j) = \varphi_j/2\pi \cdot \lambda_j/2 + N \cdot \lambda_j/2$ zugeordnet sind. Im einfachsten Fall wird der Zähler jeweils um Eins inkrementiert oder auch von einem vorgegebenen Startwert dekrementiert. Die natürliche Zahl $N \in N$ beschreibt dabei die Mehrdeutigkeit der Phasenmessung, d.h. die Periodizität der Phasen, sodass schrittweise der Wert für $N$ erhöht und der Zähler der jeweils zugeordneten Zelle verändert wird. Die Distanz $R_N(\varphi_j)$ bzw. die zugeordnete Zelle repräsentieren somit eine für die jeweils gemessene Phase mögliche Distanz zum Zielobjekt bzw. die zugeordnete Absolutphase.

Dabei können sich die Phasenwerte auf beliebige periodische Signale beziehen, also insbesondere modulierte elektromagnetische Wellen, Schallwellen, Wasserwellen oder auch Reifen unterschiedlicher Durchmesser.

Der Schritt der schrittweisen Erhöhung von Zählern für alle in Frage kommenden $N \in N$ als Laufvariable für die Periodizität erfolgt für alle Phasenverschiebungen $\varphi_j$ und damit für alle Wellenlängen. Als Resultat folgt, eine Verteilung der Zählerstände in den Zellen. Die Distanz zu dem wenigstens einen Zielobjekt und/oder die korrespondierende Absolutphase für eine betrachtete Wellenlänge $\lambda_j$ wird dann anhand des Maximums der Verteilung bzw. dem höchsten Zählerstand bestimmt.

Die Repräsentierung der Zellen in Form einer Datenstruktur kann in verschiedener Form geschehen. Da nur in einem Teil der Zellen ein von Null verschiedener Zählerstand generiert wird, kann neben der Datenstruktur eines Felds beispielsweise auch ein binärer Suchbaum oder eine Hash-Tabelle verwendet werden.

Soll eine gleichzeitige Distanzmessung zu mehreren Zielobjekten erfolgen, so liegt ein Mehrzielfall vor, bei dem die Zuordnung der Einzelphasen zu den Zielen unter Umständen nicht mehr gegeben ist und vom Empfänger die vermengten Einzelphasen der Reflektionen von den unterschiedlichen Zielobjekten empfangen werden, sodass aus den gemessenen Phasen als Messphase die Einzelphasen wieder extrahiert werden müssen. Eine auf dem Satz von Carathéodory basierende vektorielle Zerlegung der Messphase in die Einzelphasen gelingt beispielsweise, wenn mindestens die zweiten harmonischen Amplitudenanteile im Empfangssignal ausgewertet werden. Eine solche Einzelzielphasen-Zerlegung, wie Sie auch in der europäischen Patentanmeldung mit der Anmeldenummer 05107764.2 beschrieben ist, erlaubt die direkte Anwendung des erfindungsgemässen Verfahrens zur Auflösung von Phasenmehrdeutigkeiten.

Unabhängig davon, ob eine solche Zuordnung der Phasen zu den Zielen vorliegt oder nicht, kann das erfindungsgemässe Verfahren identisch wie im Einzelfall durchgeführt werden.

Für jede Phase $\varphi_{ij}$ erfolgt eine Inkrementierung der Zähler der einer Entfernung $R_N(\varphi_{ij}) = \varphi_{ij} / 2\pi \cdot \lambda_j / 2 + N \cdot \lambda_j / 2$ zugeordneten Zellen. Die einzelnen Phasen werden separat prozessiert. Die Entfernung zu den Zielen folgt direkt aus den grössten lokalen Maxima der Häufigkeitsverteilung.

Damit weist das erfindungsgemässe Verfahren in algorithmischer Hinsicht folgende Elemente auf

a.) eine Umrechnungsroutine, um von einem Phasenwert $\varphi_\lambda \in [0, 2\pi]$, der zu einer Wellenlänge $\lambda$ korrespondiert, auf alle möglichen dazu passenden Entfernungen $R_N$ zu schliessen

$$R_N(\varphi_\lambda) = \frac{\varphi_\lambda}{2\pi} \frac{\lambda}{2} + N \frac{\lambda}{2} \quad \text{mit} \quad N = 0,1,2,\ldots,N_{max} \qquad (2)$$

b.) eine Abbildung, die für eine vorgegebene Entfernung $R$ eine Korrespondenz zu mindestens einer Speicherzelle eines Speichermoduls herstellt. Jede solche Speicherzelle korrespondiert auf diese Weise zu einem gewissen kleinen Entfernungsbereich der Grösse $\Delta R$. Die Speicherzelle möge auf diese Weise zu einem Index korrespondieren, der beispielsweise gegeben ist durch

$$n = \text{integer}\left(\frac{R}{\Delta R}\right) \qquad (3)$$

c.) eine Routine, die den Inhalt aller Speicherzellen, die über a) und b) zu einem Phasenwert korrespondieren, inkrementiert, z.B. um mindestens 1 erhöht. Jede Speicherzelle dient damit als Zähler, der protokolliert, wie viele Phasenwerte zu dem Entfernungsbereich korrespondieren, der dieser Speicherzelle zugeordnet ist.

d.) eine Routine, die nachdem alle Phasenwerte mittels der Routine c) in beliebiger Reihenfolge verarbeitet worden sind, die $M$ Speicherzellen mit den meisten Einträgen ermittelt. Diese Speicherzellen korrespondieren jeweils zu kleinen Entfernungsbereichen, in denen sich die $M$ Ziele befinden, da diese Entfernungsbereiche mit einer maximalen Anzahl von Phasenwerten kompatibel sind. Wenn $n$ beispielsweise der einer solchen Speicherzelle zugeordnete Index ist, dann befindet sich ein Ziel in der Entfernung zwischen $n\Delta R$ und $(n+1)\Delta R$.

In einer algorithmischeren Schreibweise kann das erfindungsgemässe Verfahren dann wie folgt dargestellt werden

1. Unterteilen des Mehrdeutigkeitsintervalls in einzelne Zellen mit der Grösse des erwarteten oder akzeptablen Fehlers, wobei jede Zelle einer Entfernung zugeordnet wird.

2. Inkrementieren eines Zählers für die Zellen, welche der Distanz $R_N(\varphi_{ij}) = \varphi_{ij}/2\pi \cdot \lambda_j/2 + N \cdot \lambda_j/2$ zugeordnet sind, für alle relevanten $N$.

3. Wiederholen des Schrittes 2 für alle Phasen, d.h. für alle *j* und im Mehrzielfall auch für alle *i*, wobei hier eine Zerlegung in Einzelzielphasen vorangeht.

4. Anhand der Maxima innerhalb der Verteilung von Zählerständen werden die den Zielobjekten zugeordneten Distanzen bestimmt.

Zum Grundalgorithmus existieren verschiedene Varianten.

Der Formulierung des Algorithmus mit einer Inkrementierung entsprechen erfindungsgemäss auch alternative Realisierungen, z.B. bei denen ein vorgegebener Zählerstand vermindert wird, sodass eine Suche nach Minima der Verteilung erfolgt. Als Startwert des Zählers könnte beispielsweise die Zahl der verwendeten Wellenlängen oder im Mehrzielfall das Produkt aus Zahl der Wellenlängen und Zahl der Zielobjekte angesetzt werden.

Das Verfahren kann erfindungsgemäss auch mehrstufig durchgeführt werden. So ist durch einen Grobsuchlauf mit einer Unterteilung des Mehrdeutigkeitsintervalls in nur wenige Zellen grösserer Breite eine erste Abschätzung möglich, z.B. hinsichtlich der vorhandenen Zahl von Zielobjekten. Unter Laufzeitgesichtspunkten kann so auch eine Einschränkung des zu analysierenden Distanzbereichs erfolgen. Durch eine Grobidentifikation der Zielobjekte und der Distanzbereiche, innerhalb derer sich die Zielobjekte befinden können, kann die Zahl der zu durchlaufenden Vielfachen der Wellenlängen eingeschränkt werden. In algorithmischer Hinsicht werden so für jede Wellenlänge Wertebereiche festgelegt, sodass nur die tatsächlich in Frage kommenden Absolutphasen betrachtet werden.

Anstatt den Zähler in einer zu einer Entfernung korrespondierenden Speicherzelle um 1 zu inkrementieren oder von einem bekannten Wert abzuziehen, können erfindungsgemäss auch alternative Verfahren verwendet werden, so z.B. zur Vermeidung von Quantisierungseffekten, die aus der zufälligen Verteilung der Einträge auf zwei zu benachbarten Entfernungsbereichen gehörenden Speicherzellen resultieren, wenn die Distanz zu einem Ziel genau der dazwischen liegenden Entfernung entspricht, d.h. die Entfernung fällt zwischen zwei Speicherzellen. Ein anderes Problem entsteht, wenn es bei zu klein gewählten Bereichen $\Delta R$ aufgrund von Messungenauigkeiten in den Phasenwerten $\varphi_{ij}$ nicht mehr zu einer Anhäufung der Einträge in den Speicherzellen kommt.

Für eine solche Vermeidung von Quantisierungseffekten eignen sich beispielsweise folgende Verfahren:

a.) Es können für jeden Wert von $R_N$ Einträge in 2 Datenstrukturen vorgenommen werden, bei denen die Zellen in ihrer Bedeutung um $\Delta R/2$ verschoben sind.

Die gesuchten Maxima, die den Entfernungen zu den Zielen entsprechen, dürfen sich auf diese Weise auch in unterschiedlichen Datenstrukturen befinden. Es werden dann bei $M$ Zielen die grössten $M$ Peaks, die zu unterschiedlichen Distanzen korrespondieren, über beide Häufigkeitstabellen hinweg ausgewählt.

b.) Statt für $R_N$ lediglich den Zähler in der Zelle n = integer $\cdot\left(\dfrac{R_N}{\Delta R}\right)$ um 1 zu erhöhen, können im Falle, dass *modulo*

$\left(\dfrac{R_N}{\Delta R}\right) \geq 0.5$ ist, Zähler in den Zellen n und n+1 erhöht werden. Im Falle *modulo* $\left(\dfrac{R_N}{\Delta R}\right) < 0.5$ können entsprechend die Zähler in den Zellen *n* und n-1 erhöht werden. Dabei wird in diesem Fäll im Gegensatz zu a.) nur eine Häufigkeitstabelle eingesetzt.

c.) Es können - ohne Berücksichtigung von *modulo* $\left(\dfrac{R_N}{\Delta R}\right)$ - bei jedem Eintrag stets die Zähler in den Zellen *n-1*, *n* und *n+1* jeweils um 1 erhöht werden, wobei n=integer $\left(\dfrac{R_N}{\Delta R}\right)$. Dieses Vorgehen kann direkt beim Eintragen in die Häufigkeitstabelle durchgeführt werden oder alternativ auch nachdem bereits alle Einträge in der exakten Zelle n vorgenommen wurden. Im letzteren Fall werden, wenn in einer Speicherzelle *n* der Zähler auf *q* steht, die Zähler in den Speicherzellen *n-1* und *n+1* jeweils um *q* erhöht. Mathematisch entspricht dies einer Faltung der ursprünglichen Häufigkeitsverteilung mit einer Box-Funktion der Breite 3 und Höhe 1.

d.) Statt wie bei c.) die Zähler in den Speicherzellen *n-1*, *n*, *n+1* jeweils um 1 zu erhöhen, kann die Speicherzelle *n* um einen grossen Wert, beispielsweise 2, und die Speicherzellen *n-1* und *n+1* um einen kleineren Wert, beispielsweise 1, erhöht werden. Wiederum kann dieses Vorgehen direkt beim Eintragen oder nach dem Eintragen aller Phasenwerte durchgeführt werden. Mathematisch entspricht dies einer Faltung der ursprünglichen Häufigkeitsverteilung mit einer Dreiecksfunktion der Breite 3 und maximalen Höhe 2. Alternativ kann man dies auch als 2-fache Faltung einer Box-Funktion der Breite 2 und Höhe 1 mit der ursprünglichen Häufigkeitsverteilung auffassen.

Andere Faltungen mit grösseren Faltungskernen als bei c.) und d.) sind erfindungsgemäss ebenfalls möglich, jedoch sind diese zur Lösung des Diskretisierungsproblems nicht notwendig. Grössere Faltungskerne können jedoch andere Probleme lösen, wie z.B. das Problem der mangelnden Anhäufung von Phasenwerten.

Faltungskerne grösserer Ausdehnung erlauben es, auch isolierte Einträge in der Häufigkeitstabelle aufzusammeln. Typische Faltungskerne sind Splines beliebiger Ordnung. Splines der Ordnung 1 sind gewöhnliche Box-Funktionen, Splines der Ordnung 2 Dreiecksfunktionen. Allgemein lassen sich Splines der Ordnung $n$ aus Splines der Ordnung $n-1$ durch Faltung mit einer Box-Funktion, d.h. einem Spline der Ordnung 1, rekursiv erzeugen. Unendlich häufiges Falten führt schliesslich zur Gauss-Kurve. Es ist im Ergebnis unerheblich, ob die Häufigkeitsverteilung gleich mit einem Spline der Ordnung $n$ gefaltet wird, oder ob man eine $n$-fache Faltung mit der Boxfunktion vorzieht, wobei die direkte Faltung mit einem Spline der Ordnung $n$ allerdings effizienter ist. Splines bieten einen natürlichen Zugang zu unterschiedlichen Auflösungsstufen. So kann auch mit Splines unterschiedlicher Auflösungsstufen gefaltet werden. Der Faltungskern ist dabei mit der Messfehler-Wahrscheinlichkeitsverteilung eines Phasenwertes korreliert. Berücksichtigt man, dass im beschriebenen Ansatz die Werte zu unterschiedlichen Phasenwerten in den Speicherzellen miteinander addiert werden - anstatt sie zu multiplizieren - kann der Faltungskern (bis auf einen Faktor) als Logarithmus der Wahrscheinlichkeitsverteilung interpretiert werden.

Umgekehrt gilt, dass man - wenn man in jeder Zelle der Häufigkeitstabelle mit dem Wert 1 startet und den Faltungskern direkt als noch nicht normierte Wahrscheinlichkeitsverteilung ansieht - statt einen Zähler in einer Speicherzelle zu inkrementieren bzw. zu dekrementieren, auch den bisherigen Wert mit dem Wert des Faltungskerns - welcher dann stets grösser 1 sein sollte - multiplizieren kann.

Da das Signal/Rausch Verhältnis der Messphasen häufig bekannt ist, stehen in einem solchen Fall Konfidenzwerte $\kappa_{ij}$ für die einzelnen Messphasen zur Verfügung. Unter Berücksichtigung dieser Konfidenzwerte können die Einträge in die Häufigkeitstabelle durchgeführt werden. So kann, wenn ein Phasenwert $\varphi_{ij}$ zu einer Speicherzelle korrespondiert, der Zähler der Speicherzelle statt um 1 auch um $\kappa_{ij}$ (oder eine von $\kappa_{ij}$ abhängige Funktion) erhöht werden. Entsprechendes gilt bei Faltungskernen.

Bei der Umrechnungsroutine kann anstelle eines einzelnen Phasenwertes $\varphi \in [0,2\pi]$ auch die Kombination von $j_0 \leq J$ Phasenwerten, die zu unterschiedlichen Wellenlängen korrespondieren, betrachtet werden. In diesem Fall muss die Routine c) für alle Kombinationen des $j_0$-Tupels $(\varphi_{\lambda 1}, \varphi_{\lambda 2},...,\varphi_{\lambda j0})$ aufgerufen werden, da nicht klar ist, ob die Phasenwerte zum gleichen Ziel korrespondieren und da keine Phasenkombination von vorneherein ausgeschlossen werden sollte. Für die kombination von $j_0 = 2$ Phasen bei $J$ Frequenzen und 2 Zielen müssen wegen der fehlenden Zuordnung der Phasen zu den Zielen also nicht nur die Phasenkombinationen $(\varphi_{1,\lambda 1},\varphi_{1,\lambda 2})$, $(\varphi_{1,\lambda 1},\varphi_{1,\lambda 3})$, ... , $(\varphi_{1,\lambda 1},\varphi_{1,\lambda J})$, $(\varphi_{1,\lambda 2},\varphi_{1,\lambda 3})$, ... , $(\varphi_{1,\lambda 2},\varphi_{1,\lambda 3})$, ... $(\varphi_{1,\lambda J-1}, \varphi_{1,\lambda J})$ und das Gleiche mit jeweils erstem Index die 2, betrachtet werden, sondern auch die Mischkombinationen zwischen Index 1 und Index 2. D.h. z . B . statt $(\varphi_{1,\lambda 1},\varphi_{1,\lambda 2})$ und $(\varphi_{2,\lambda 1},\varphi_{2,\lambda 2})$ müssen jetzt alle 4 Kombinationen $(\varphi_{i,\lambda 1},\varphi_{k,\lambda 2})$ mit i,k $\in \{1,2\}$ berücksichtigt werden. Zu der Kombination von $j_0 = 2$ Phasenwerten korrespondieren beispielsweise nur noch die Entfernungen, bei denen oder kurz $2R_{N1}(\varphi_{\lambda 1}) = 2R_{N2}(\varphi_{\lambda 2})$ gegeben ist. Diese Entfernungen lassen sich direkt über ein 2-dimensionales (im allgemeinen $j_0$-dimensionales) Phasendiagramm oder (für $j_0 = 2$) über sogenannte Laning-Methoden erhalten. Durch Übergang zur sogenannten Widelane erhält man den Phasenwert $\varphi_\lambda = \varphi_{\lambda 2} - \varphi_{\lambda 1}$ bei der Wellenlänge $\lambda = \dfrac{\lambda_1 \lambda_2}{\lambda_1 - \lambda_2}$ (Wellenlängen, die zur Frequenz $f = f_2$

- $f_1$ mit den Frequenzen $f_i = \dfrac{c}{\lambda_i}, (i = 1,2)$ gehört). Dieser Phasenwert korrespondiert zu Entfernungen

$$2R_N\left(\varphi_\lambda\right) = \frac{\varphi_\lambda}{2\pi}\lambda + N\lambda \, ,$$ bzw. nach Einsetzen von $\varphi_\lambda$ und $\lambda$

$$2R_N\left(\varphi_{\lambda_1},\varphi_{\lambda_2}\right) = \frac{\varphi_{\lambda_1} - \varphi_{\lambda_2}}{2\pi}\frac{\lambda_1\lambda_2}{\lambda_2 - \lambda_1} + N\frac{\lambda_1\lambda_2}{\lambda_2 - \lambda_1} \quad \mathtt{mit} \quad N = 0,1,2,...,N_{\max} \quad (4)$$

Es gilt

$$R_N\left(\varphi_{\lambda_1},\varphi_{\lambda_2}\right)= R_{N_1}\left(\varphi_{\lambda_1}\right)= R_{N_2}\left(\varphi_{\lambda_2}\right) \quad \text{mit}\quad N=N_1-N_2 \qquad (5)$$

d.h. $R_N(\varphi_1,\varphi_2)$ für $N=N_1-N_2$ sind die Entfernungen, für die $R_{N_1}(\varphi_{\lambda_1})=R_{N_2}(\varphi_{\lambda_2})$ gilt. Für allgemeines $N=0,1,2,...$ sind $R_N(\varphi_1,\varphi_2)$ die Entfernungen, für die $R_{N_1}(\varphi_{\lambda_1})\approx R_{N_2}(\varphi_{\lambda_2})$ ist. $R_N(\varphi_1,\varphi_2)$ zählt somit für allgemeines $N$ die Kandidaten für $R_{N_1}(\varphi_{\lambda_1})=R_{N_2}(\varphi_{\lambda_2})$ auf.

Die Abbildung einer Distanz R auf eine Speicherzelle in Routine b.) kann im einfachsten Fall über ein Array realisiert werden, d.h. über einen ununterbrochenen Speicherblock, bei dem Speicherzelle 1 zu Distanz 0 bis $\Delta R$ korrespondiert, Speicherzelle 2 zu $\Delta \boldsymbol{R}$ bis $2\Delta\boldsymbol{R}$ usw. Alternativ kann aber auch jede Art von Suchdatenstruktur verwendet werden, die bei vorgegebenem Index $n = \text{integer}\left(\dfrac{R}{\Delta R}\right)$ eine oder eventuell auch mehrere Speicherzellen anspricht.

Als Beispiele seien hier (binäre) Suchbäume (Trees), Hash-Tables, Skip-Lists und jede Art von Tries genannt. Eine nähere Beschreibung dieser Strukturen findet sich beispielsweise in Robert Sedgewick, Algorithms in C, Parts 1-4: Fundamentals, Data Structures, Sorting, Searching, Addison Wesley, 1998. Solche "Sparse"-Datenstrukturen sind insbesondere bei kleinem $\Delta R$ und begrenzten Speicherressourcen von Bedeutung. Sie erlauben es, dass kein Speicher für Entfernungen verbraucht wird, zu denen keine Phasenwerte korrespondieren. Damit kann $\Delta R$ beliebig klein gewählt werden. All diese Datenstrukturen sollen im Folgenden als Häufigkeitstabellen bezeichnet werden.

Die Bestimmung der Maxima muss nicht zwangsläufig am Ende des Eintragens aller Phasenwerte stattfinden, sondern kann auch während des Eintragens mitprotokolliert werden. Dies bietet sich insbesondere dann an, wenn für die Häufigkeitstabelle ein sehr grosses Array verwendet wird, das den Bereich von $R=0$ bis $R=R_{max}$ sehr genau, d.h. mit einem kleinen $\Delta\boldsymbol{R}$, auflöst.

Insbesondere bei den oben dargestellten Methoden zur Vermeidung von Quantisierungseffekten und zur Behandlung von Messungenauigkeiten enthalten die direkt dem Maximalpeak angrenzenden Zellen eine sehr hohe Anzahl von Treffern. Um diese nicht fälschlich als Ziele zu detektieren, können annahmegemäß alle Zellen in der Umgebung eines gefundenen Peaks nicht als Ziel akzeptiert werden solange die Anzahl der Treffer monoton abnimmt.

Neben der Mehrfachauflösung bei den Faltungskernen kann auch - wie zuvor bereits angesprochen - eine Mehrfachauflösung bei der Wahl von $\Delta\boldsymbol{R}$ durchgeführt werden. Hierfür wird $\Delta\boldsymbol{R}$ zunächst relativ gross gewählt, sodass man im Fall der Wahl eines Arrays als Häufigkeitstabelle mit relativ geringem Speicherplatz auskommt. Sind die Entfernungen zu den Zielen auf diese Weise relativ grob, d.h. mit der Genauigkeit $\Delta\boldsymbol{R}$, bestimmt, können diese Bereiche im Anschluss genauer unterteilt werden. Dies kann rekursiv immer weiter verfeinert werden. Man beachte, dass bei anfänglich zu grosser Wahl von $\Delta\boldsymbol{R}$ es eventuell nicht zur Ausbildung eines eindeutigen Peaks kommt, da der Peak im Rauschen verschwindet.

Das erfindungsgemässe Verfahren kann nahezu beliebig parallelisiert werden, wofür beispielsweise folgende Ansätze zur Verfügung stehen

- Die einzelnen Phasenwerte können parallel von verschiedenen Recheneinheiten in die Häufigkeitstabelle eingetragen werden.

- Einträge in unterschiedlichen Entfernungsbereichen können von verschiedenen Recheneinheiten parallel durchgeführt werden, z.B. Recheneinheit 1 für Entfernungen zwischen 0 und 10m, Recheneinheit 2 für Entfernungen zwischen 10 und 20m, usw.

- Kombination der Verfahren a.) und b.)

- Die Detektion der Maxima in der Häufigkeitstabelle kann (weitestgehend) parallel erfolgen, indem unterschiedliche Recheneinheiten Speicherzellen zu unterschiedlichen Entfernungsbereichen analysieren.

Das erfindungsgemässe Verfahren kann auch als Vorverarbeitungsschritt zur Ermittlung von Kandidaten für die Entfernungen zu mehreren Zielen dienen. Diese dann zahlenmäßig reduzierten Kandidaten können mittels einer Bewertungsfunktion anschliessend genauer untersucht werden. Aufgrund der reduzierten Zahl von Kandidaten kann die Bewertungsfunktion wiederum aufwendiger gewählt werden, ohne dass sich das Laufzeitverhalten zu ungünstig gestaltet.

Mit dem erfindungsgemässen Verfahren können mehrere Phasenmessreihen über die Zeit ohne Abänderungen in eine gemeinsame Häufigkeitstabelle eingetragen werden. Dies bietet sich insbesondere bei stehenden Zielen und/oder schlechtem Signal/Rausch-Verhältnis an. Sollten Messreihen zu unterschiedlichen Zeitpunkten zu Peaks bei unterschiedlichen Distanzen führen - obwohl bekannt ist, dass es sich um stehende Ziele handelt - so wird automatisch eine wahrscheinlichste Distanz ermittelt.

Das erfindungsgemässe Verfahren zur Auflösung einer Phasenmehrdeutigkeit wird nachfolgend anhand von in der Zeichnung schematisch dargestellten Ausführungsbeispielen rein beispielhaft näher beschrieben. Im einzelnen zeigen

Fig. 1a-b die Prinzipdarstellung eines Phasenmessverfahrens nach dem Stand der Technik;

Fig. 2 die Prinzipdarstellung eines Verfahrens nach dem Stand der Technik zur Auflösung einer Phasenmehrdeutigkeit für den Einzielfall;

Fig. 3 die schematische Darstellung des Mehrzielfalls;

Fig. 4 die schematische Darstellung der Phasen für den Mehrzielfall;

Fig. 5 die Polardarstellung der Phasen für den Mehrzielfall;

Fig. 6 die schematische Darstellung der Phasen für den Mehrzielfall bei Nutzung der zweiten Harmonischen;

Fig. 7 die Beziehungen bei Nutzung der zweiten Harmonischen;

Fig. 8 die schematische Darstellung der vektoriellen Zerlegung in Einzelphasen für den Mehrzielfall;

Fig. 9 die Prinzipdarstellung des erfindungsgemässen Verfahrens zur Auflösung einer Phasenmehrdeutigkeit für den Mehrzielfall;

Fig. 10 die Gesamtdarstellung eines Beispiels des erfindungsgemässen Verfahrens für den Mehrzielfall;

Fig. 11 die Ausschnittsdarstellung des Beispiels des erfindungsgemässen Verfahrens für den Mehrzielfall;

Fig. 12 die Prinzipdarstellung einer Variante des erfindungsgemässen Verfahrens mit zwei gegeneinander verschobenen Zellenfolgen und

Fig. 13 die Prinzipdarstellung einer Variante des erfindungsgemässen Verfahrens mit einer beispielhaften Peakidentifikation.

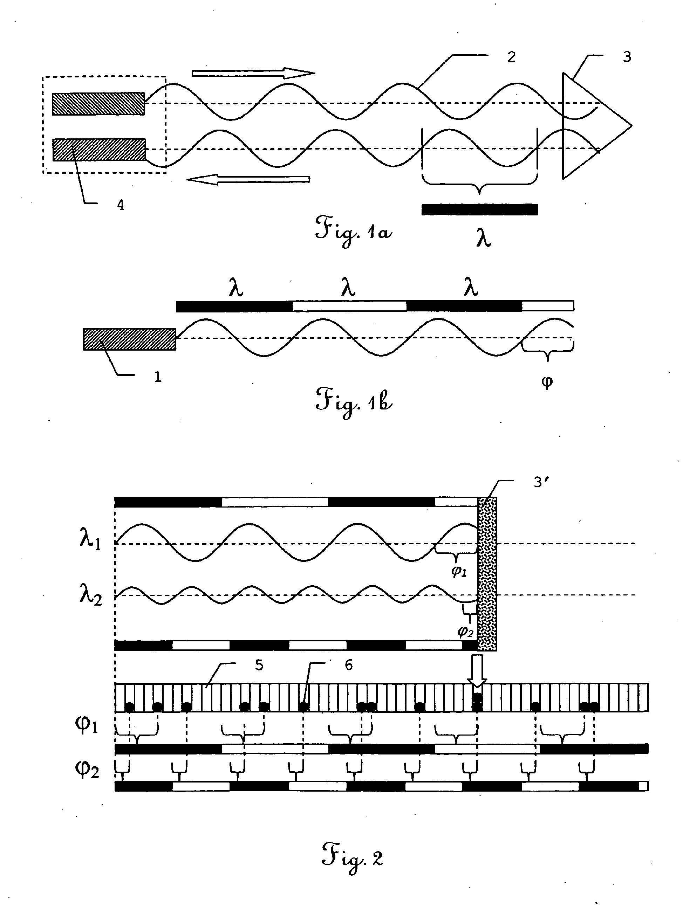

Fig.1a-b zeigen die Prinzipdarstellung eines Phasenmessverfahrens nach dem Stand der Technik bei dem die Entfernung zwischen einem Gerät und einem Ziel bestimmt wird.

In Fig.1a wird von einem Sender 1 eine Trägerwelle mit aufmoduliertem Signal, z.B. ein moduliertes Lichtsignal als Lichtwelle 2 auf ein Ziel ausgesendet, das einen Retroreflektor 3 aufweisen kann, und von dort zu einem Empfänger 4 zurück reflektiert. Im Gegensatz zum Laufzeitverfahren wird keine zeitliche Differenz zwischen Aussendung und Empfang registriert. Aufgenommen wird die Verschiebung der Phase des ein- und ausgehenden Signals. Diese Phase $\varphi$ ist abhängig von der Entfernung zwischen Gerät und Ziel, da die Entfernung einem Vielfachen der Wellenlänge $\lambda$ der ausgesendeten Lichtwelle 2 sowie einem verbleibendem Residuum entspricht. Das Residuum stellt den bei einer Teilung der Entfernung durch die Wellenlänge $\lambda$ verbleibenden nicht-ganzzahligen Anteil dar, wie in Fig.1b dargestellt. Die gemessene Phase $\varphi$ ist ein Mass für das Residuum, sodass bei Kenntnis dieser Phasen $\varphi$ und der Anzahl der Wellenlängen $\lambda$ die Entfernung zwischen Messgerät und Ziel abgeleitet werden kann. Da bei diesem Verfahren die Anzahl der Wellenlängen $\lambda$ als ganzzahliger Anteil nicht direkt bestimmt wird, muss eine zusätzliche Auflösung dieser Ambiguität oder Phasenmehrdeutigkeit erfolgen. Dies kann beispielsweise durch die Verwendung mehrerer - typischerweise 2 bis 8 - Modulationsfrequenzen erfolgen, für die sequentiell die absolute Phase des Empfangssignals relativ zum Sendesignal verrechnet wird. Aus der Mehrzahl dieser Messungen kann dann die Entfernung zum Zielobjekt abgeleitet werden.

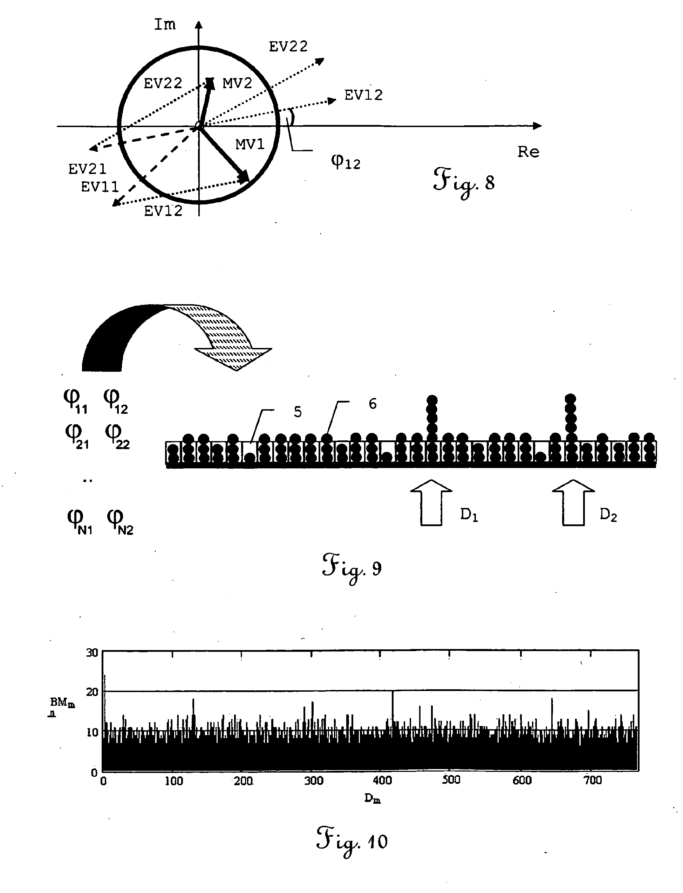

Das erfindungsgemässe Verfahren beruht auf dem Grundprinzip der klassischen Phasenmessung, weist jedoch durch die andere Auswertung der gemessenen Phasen Vorteile auf, insbesondere hinsichtlich des Laufzeitverhaltens und der Robustheit gegenüber Rauschen und Ausreissern in den gemessenen Phasenwerten. Eine Prinzipdarstellung des erfindungsgemässen Verfahrens zur Auflösung einer Phasenmehrdeutigkeit für den Mehrzielfall erfolgt in Fig.9.

Im Stand der Technik sind Verfahren zur Auflösung von Phasenmehrdeutigkeiten bekannt, die ebenfalls die Emission von elektromagnetischer oder anderer Strahlung mit periodischem Signal, z.B. Schallwellen, und deren Reflektion durch ein Zielobjekt 3' nutzen. Ein solches Verfahren wird rein exemplarisch in Fig.2 erläutert. Dabei weist die Strahlung wenigstens zwei Wellenlängen $\lambda_1$ und $\lambda_2$ auf, für die jeweils die zugehörigen Phasen $\varphi_1$ und $\varphi_2$ gemessen werden. Das Mehrdeutigkeitsintervall, das hier durch den Distanzbereich festgelegt wird, in dem sich das Zielobjekt 3' befinden kann, wird in einzelne Zellen 5 unterteilt. Jeder Zelle 5 wird ein Zähler zugeordnet, dessen Zählerstand hier durch eine Kugel 6 veranschaulicht wird. Für den hier exemplarisch betrachteten Fall von einem Zielobjekt 3' und zwei Wellenlängen $\lambda_1$ und $\lambda_2$ erfolgt nun die Inkrementierung der Zähler, indem der durch die gemessenen Phasen $\varphi_1$ oder $\varphi_2$ repräsentierten Distanz eine Zelle zugeordnet wird, deren zugeordneter Zähler um Eins erhöht wird, was graphisch der Ablage einer Kugel 6 in der jeweiligen Zelle 5 entspricht. Zur Berücksichtigung der Mehrdeutigkeit, die eine Bestimmung der Distanz nur bis auf ein Vielfaches der Wellenlänge $\lambda_1$ oder $\lambda_2$ erlaubt, wird der Vorgang für eine wachsende Zahl von Vielfachen der Wellenlängen $\lambda_1$ und $\lambda_2$ durchgeführt. Nach Abschluss des Verfahrens für alle Wellenlängen und möglichen Vielfachen sind die Zähler einiger Zellen um einen gewissen Betrag erhöht. In diesem einfachen Fall weist der Zähler einer einzigen Zelle 5 den Wert Zwei auf, was durch zwei Kugeln 6 in dieser Zelle 5 zum Ausdruck kommt. Die dieser Zelle 5 zugeordnete Distanz stellt die wahre Zieldistanz des Zielobjektes 3' dar.

Neben statischen Anwendungen, bei denen ein unbewegtes Zielobjekt vermessen wird, kann auch eine Dynamisierung erfolgen, indem mehrere Aufteilungen des Mehrdeutigkeitsintervalls als Häufigkeitstabellen erzeugt werden. Die Häufigkeitstabellen stellen somit mehrfache Kopien einer Aufteilung dar. Hierbei wird jede Häufigkeitstabelle einem Zeitraum zugeordnet und in jedem Zeitraum werden die zeitlich zugehörigen Phasen $\varphi_j$ in die dem Zeitraum zugeordnete Häufigkeitstabelle einsortiert. Die verschiedenen Häufigkeitstabellen können dann isoliert und auch miteinander korreliert ausgewertet werden, z.B. unter Annahme einer konstanten Geschwindigkeit des Zielobjekts, welche sich in einer entsprechenden Verschiebung der Häufigkeiten bzw. Zählerstände innerhalb der zeitlich geordneten Häufigkeitstabellen bemerkbar macht.

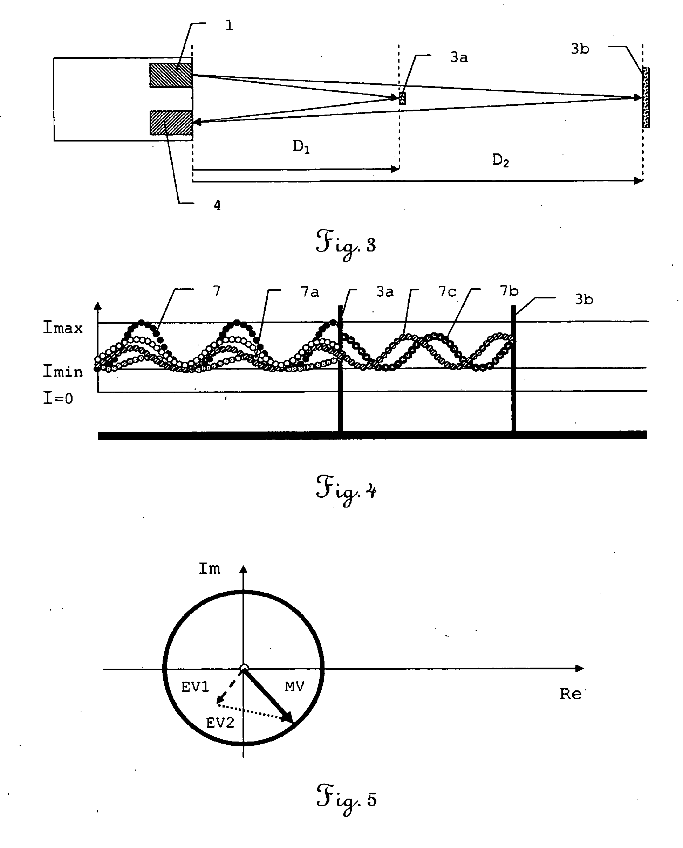

In Fig.3 werden die Verhältnisse für eine Entfernungsmessung im Mehrzielfall schematisch dargestellt. Vom Sender 1 wird ein Signal ausgesendet, das nun an mehreren Zielen, die hier exemplarisch durch ein Objekt als erstes Zielobjekt 3a in einer Zieldistanz $R_1$ und ein weiteres Objekt als zweites Zielobjekt 3b in einer Zieldistanz $R_2$ verkörpert werden, eine Reflektion erfährt, die vom Empfänger 4 detektiert wird. Dabei überlagern sich die Anteile der beiden Zielobjekte 3a und 3b im Empfänger, sodass dieser nur ein einziges Signal mit einer Phase aufnimmt, das Anteile von beiden Einzelphasen aufweist. Fig.4 zeigt die schematische Darstellung der Phasen für den Mehrzielfall. Die emittierte Strahlung 7 trifft nun auf das erste Zielobjekt 3a, von dem ein erster Strahlungsanteil 7a zurückreflektiert wird. Der restliche Teil trifft, z.B. nach Transmission im Falle eines durchlässigen ersten Zielobjekts 3a, als zweiter Strahlungsanteil 7b auf das zweite Zielobjekt 3b, das hier als undurchlässig betrachtet werden soll. Der von diesem zweiten Zielobjekt 3b zurückreflektierte dritte Strahlungsanteil 7c trifft schliesslich wieder auf den Empfänger. Dieser registriert stets die überlagerten ersten und zweiten Strahlungsanteile 7a und 7c mit einer gemeinsamen Mehrobjektphase.

Die zur Fig.4 korrespondierende Polardarstellung der Phasen für den Mehrzielfall erfolgt in Fig.5. Dargestellt ist der Mehrzielvektor bzw. Mehrobjektvektor MV, welcher das empfangene Signal aus den überlagerten ersten und zweiten Strählungsanteilen repräsentiert. Der Begriff Mehrobjekt bedeutet hierbei, dass auch Objekte Beiträge zur empfangenen Strahlung liefern können, die nicht als zu vermessendes Ziel im eigentlichen Sinne betrachtet werden. Der Mehrobjektvektor MV setzt sich dabei aus einem ersten Einzelobjektvektor EV1, welcher dem ersten Strahlungsanteil entspricht, und einem zweiten Einzelobjektvektor EV2, welcher dem zweiten Strahlungsanteil entspricht, zusammen. Wird der gemessene Mehrobjektvektor MV in die vektoriellen Komponenten zerlegt, so können die entsprechenden Einzelobjektphasen abgeleitet und das erfindungsgemässe Verfahren auch für den Mehrzielfall bzw. Mehrobjektfall direkt angewendet werden. Man beachte, dass beliebig viele Zerlegungen in Einzelobjektvektoren EV1 & EV2 existieren, die den gemessenen Mehrobjektvektor MV erzeugen.

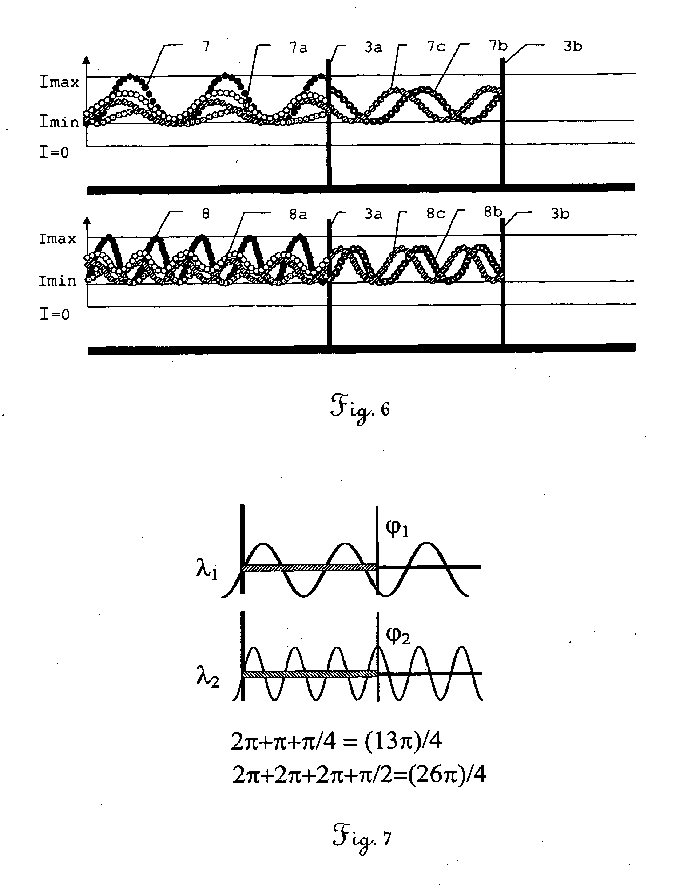

Eine solche eindeutige Zerlegung ist beispielsweise möglich, wenn höhere harmonische Anteile beim Signalempfang und der Signalauswertung mitberücksichtigt werden. Fig.6 stellt die Phasen für den Mehrzielfall bei Nutzung der zweiten Harmonischen schematisch dar. Für eine entsprechend der zweiten Harmonischen mit doppelter Frequenz emittierte Strahlung 8 gelten nun ähnliche Bedingungen. Die höherharmonische Strahlung 8 trifft ebenfalls auf das erste Zielobjekt 3a, von dem ein erster höherharmonischer Strahlungsanteil 8a zurückreflektiert wird. Der restliche Teil erreicht als zweiter höherharmonischer Strahlungsanteil 8b das zweite Zielobjekt 3b. Der von diesem zweiten Zielobjekt 3b zurückreflektierte dritte höherharmonische Strahlungsanteil 8c trifft schliesslich wieder auf den Empfänger. Dieser registriert ebenfalls die überlagerten ersten und zweiten höherharmonischen Strahlungsanteile 8a und 8c mit einer gemeinsamen höherharmonischen Mehrobjektphase.

Fig.7 zeigt die Beziehungen bei Nutzung der zweiten Harmonischen für eine spezielle Distanz des Zielobjekts. Da die Wellenlänge der zweiten Harmonischen halbiert ist, verdoppelt sich deren Absolutphase. Die Kenntnis dieser Phasenbeziehung erlaubt eine Zerlegung in die Einzelobjektphasen, die in Fig.8 in der Polardarstellung schematisch erläutert ist. Gemäss dem Satz von Carathéodory existiert eine eindeutige Zerlegung des Mehrzielvektors, wenn eine weitere Information, z.B. durch die zweite Harmonische, vorliegt, sodass eine Zerlegung und Ableitung der zugehörigen Einzelobjektphasen möglich ist. Der Mehrobjektvektor MV1 wird in die Einzelobjektvektoren EV11 und EV12 bzw. der Mehrobjektvektor MV2 in die Einzelobjektvektoren EV21 und EV22 zerlegt. Aus Kenntnis eines Einzelobjektvektors kann dann die zugehörige Phase abgeleitet werden, wie hier exemplarisch für den Einzelobjektvektor EV12 und die Einzelobjektphasen $\varphi_{12}$ dargestellt.

In Fig.9 erfolgt die Prinzipdarstellung des erfindungsgemässen Verfahrens zur Auflösung einer Phasenmehrdeutigkeit für den Mehrzielfall. Für jede der Einzelobjektphasen $\varphi_{ij}$ wird der Schritt des Inkrementierens der Zähler durchgeführt, sodass schliesslich eine Verteilung von Zählerständen folgt, aus der die wahren Zieldistanzen $R_1$ und $R_2$ abgeleitet werden können, was in diesem Beispiel durch Identifikation der beiden höchsten Zählerstände erfolgt. Auch im Mehrzielfall kann die für Fig.2 beschriebene Dynamisierung des Verfahrens für bewegte Zielobjekte erfolgen.

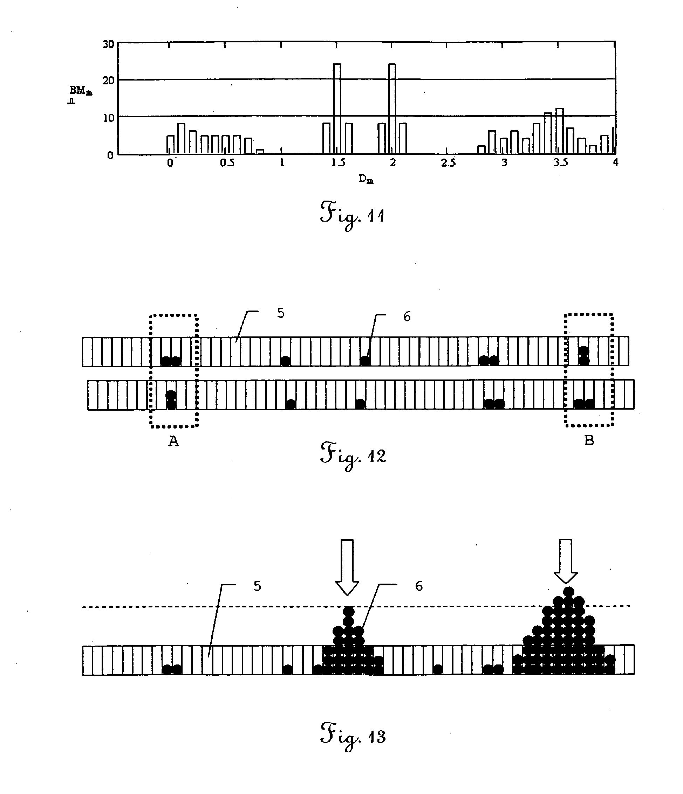

Ein Beispiel des erfindungsgemässen Verfahrens für den Mehrzielfall wird in Fig.10 und Fig.11 gezeigt, wobei Fig.10 die Gesamtdarstellung des Mehrdeutigkeitsintervalls und Fig.11 eine Ausschnittsdarstellung umfassen. In diesem Beispiel sind zwei Zielobjekte in den Entfernungen von 1,5 und 2 Meter vom Entfernungsmesser entfernt angeordnet. Das Mehrdeutigkeitsintervall beträgt 768 Meter. Die Messung erfolgt mit 8 Frequenzen, wobei die Zellen eine Breite von 0,1 Metern aufweisen und mit der Gewichtung 1/3/1 aufgefüllt werden, d.h. der Zähler einer Zelle, die der Distanz $RN(\varphi_{ij}) = \varphi_{ij} / 2\pi \cdot \lambda_j / 2 + N \cdot \lambda_j / 2$ entspricht, wird um Drei, die der daneben liegenden Zellen jeweils um Eins inkrementiert. Die Einzelobjektphasen werden ohne Sortierung nach Zugehörigkeit direkt verarbeitet. Die maximalen Zählerstände betragen in diesem Beispiel 24 und sind in Fig.10 ganz am linken Rand zu erkennen. Die Ausschnittsdarstellung in Fig. 11 zeigt die beiden Peaks in der Mitte der Abbildung. Den beiden Zellen mit den höchsten Zählerständen sind die korrekten Distanzen 1,5 und 2 Meter zugeordnet.

In Fig.12 erfolgt die Prinzipdarstellung einer Variante des erfindungsgemässen Verfahrens mit zwei gegeneinander verschobenen Zellenfolgen zur Vermeidung bzw. Auflösung von Quantisierungsfehlern. Das Inkrementieren des Zählerstands erfolgt hier parallel auch für eine weitere Aufteilung des Mehrdeutigkeitsintervalls, die hinsichtlich einer Zuordnung zur Distanz um eine halbe Breite der Zelle 5 verschoben ist. Durch diesen Ansatz können beispielsweise Peaks besser identifiziert werden, die aufgrund einer ungünstigen Unterteilung und Zuordnung auf mehrere Zellen 5 aufgeteilt werden. Dieses Problem wird in den Zonen A und B verdeutlicht, in denen jeweils für eine Zellenfolge ein Peak entsteht, der in der verschobenen Zellenfolge lediglich als Auffüllung von zwei benachbarten Zellen 5 in Erscheinung tritt.

Fig.13 zeigt die Prinzipdarstellung einer anderen Variante des erfindungsgemässen Verfahrens mit einer beispielhaften Peakidentifikation. Aufgrund von Quantisierungseffekten und Messungenauigkeiten enthalten die direkt dem Maximalpeak angrenzenden Zellen 5 eine sehr hohe Anzahl von Treffern, die hier wiederum als eine Anzahl von Kugeln 6 dargestellt werden. Eine reine Orientierung an den Zellen 5 mit den höchsten Zählerständen würde in diesem Beispiel für den rechten Peak insgesamt drei Zellen identifizieren, die über dem höchsten Zählerstand des linken Peaks liegen. Ordnet man diese drei Zellen nur aufgrund ihrer Zählerstände jeweils drei Zielen zu, so ergibt sich mit den drei direkt aneinandergrenzenden Zielidentifikationen eine falsche Lösung, die zudem nicht eindeutig ist, da für die zu identifizierenden zwei Ziele drei Zellen in Frage kommen. Um diese falsche Lösung zu vermeiden, können ansatzgemäss alle Zellen 5 in der Umgebung eines gefundenen Peaks nicht als Ziel akzeptiert werden solange die Anzahl der Treffer monoton abnimmt. Somit werden die direkt an den höchsten Zählerstand angrenzenden Werte unterdrückt und die dem linken Peak zugeordnete Zelle 5 mit dem höchsten Zählerstand wird als zum zweiten Ziel zugehörig identifiziert. Das Verfahren beginnt somit beim höchsten Zählerstand und sucht den nächsthöheren Zählerstand, wobei es alle Zählerstände innerhalb des monoton abnehmenden Bereichs um das absolute Maximum unterdrückt. Mit der Identifikation des nächsten Peaks würden im Dreizielfall auch dort alle Zählerstände innerhalb des Monotoniebereichs unterdrückt und schliesslich die Zelle 5 mit dem dritthöchsten Zählerstand ausserhalb der ausgeschlossenen Bereiche als dritte Zielentfernung gefunden.

**Patentansprüche**

**1.** Verfahren zur mehrzielfähigen Auflösung von Phasenmehrdeutigkeiten mit wenigstens

- einem Aussenden eines periodischen Signals (2,7), insbesondere als Licht- oder Schallwelle, auf wenigstens zwei innerhalb eines Mehrdeutigkeitsintervalls befindliche Objekte (3a,3b), wobei das Signal (2) wenigstens $J \geq 2$, insbesondere aufmodulierte, Wellenlängen $\lambda_j$ mit $1 \leq j \leq J$ aufweist,
- einem Empfangen des von den Objekten (3a,3b) reflektierten Signals (7a,7c),
- einem Ableiten der Phasen $\varphi_j$ als Phasenverschiebung für jede der Wellenlängen $\lambda_j$ aus dem empfangenen Signal; **gekennzeichnet durch** ein Zerlegen in den $I \geq 2$ Objekten (3a,3b) zugeordnete Einzelobjektphasen $\varphi_{ij}$ mit $1 \leq i \leq I$,
- ein Aufteilen des Mehrdeutigkeitsintervalls in Zellen (5) definierter Breite, wobei jeder Zelle (5) ein Zählerstand und eine Distanz zugeordnet wird und eine Zählerstandverteilung ableitbar ist,
- ein Inkrementieren des Zählerstands für die Zellen (5), welche der möglichen Objektdistanz $R_N(\varphi_{ij}) = \varphi_{ij} / 2\pi \cdot \lambda_j / 2 + N \cdot \lambda_j / 2$ zugeordnet sind, wobei das Inkrementieren für dem Mehrdeutigkeitsintervall zuordenbare $N \in \mathbf{N}$ als

Periodizitätslaufvariable, insbesondere für alle dem Mehrdeutigkeitsintervall zuordenbare $N \in \mathbf{N}$, und für alle Einzelobjektphasen $\varphi_{ij}$ erfolgt,
• ein Bestimmen einer Absolutobjektphase und/oder einer wahren Objektdistanz für wenigstens eines der Objekte (3a, 3b).

2. Verfahren nach Anspruch 1,
**dadurch gekennzeichnet, dass**
für die einem jeweiligen $N \in \mathbf{N}$ und einer jeweiligen Einzelobjektphase $\varphi_{ij}$ zugeordnete mögliche Objektdistanz ein Inkrementieren des Zählerstands für mehr als eine Zelle (5) erfolgt, insbesondere unter Verwendung einer Gewichtsfunktion.

3. Verfahren nach Anspruch 1 oder 2,
**dadurch gekennzeichnet, dass**
das Inkrementieren des Zählerstands für die Zellen (5) erfolgt, welche Kombinationen eines T-Tupels aus Phasen $\varphi_{ij}$ mit $T \leq J$ zugeordnet sind, insbesondere für die Zweier-Tupel mit $\mathbf{T} = \mathbf{2}$ und einem Inkrementieren des Zählerstands

für die $\dfrac{\varphi_{ij_1}}{2\pi}\lambda_{j_1} + N_{j_1}\lambda_{j_1} \approx \dfrac{\varphi_{ij_2}}{2\pi}\lambda_{j_2} + N_{j_2}\lambda_{j_2}$ , zugeordneten Zellen (5), wobei $j_1 \neq j_2$ und $j_1, j_2 \leq J$.

4. Verfahren nach einem der vorangehenden Ansprüche,
**dadurch gekennzeichnet, dass**
das Inkrementieren des Zählerstands unter Verwendung einer Laning-Methode erfolgt.

5. Verfahren nach einem der vorangehenden Ansprüche,
**dadurch gekennzeichnet, dass**
das Bestimmen der Absolutphase und/oder der wahren Objektdistanz zu einem der Objekte durch Identifikation des höchsten Zählerstands erfolgt.

6. Verfahren nach Anspruch 5,
**dadurch gekennzeichnet, dass**
einer oder mehrere der aktuell höchsten Zählerstände fortlaufend protokolliert wird.

7. Verfahren nach einem der vorangehenden Ansprüche,
**dadurch gekennzeichnet, dass**
das Bestimmen der Absolutphasen und/oder der wahren Objektdistanzen zu den Objekten (3a,3b) anhand einer Auswertung der Zählerstandverteilung erfolgt, insbesondere durch die Identifikation von den Objekten (3a,3b) zuordenbaren Maxima.

8. Verfahren nach einem der vorangehenden Ansprüche,
**dadurch gekennzeichnet, dass**
ein Grobsuchlauf zur Bestimmung von Parametern erfolgt, insbesondere zur Optimierung der Wahl der Breite der Zellen (5).

9. Verfahren nach einem der vorangehenden Ansprüche,
**dadurch gekennzeichnet, dass**
die Breite der Zellen (5) in Abhängigkeit einer vorgegebenen Messgenauigkeit und/oder mit einer Mehrfachauflösung gewählt wird.

10. Verfahren nach einem der vorangehenden Ansprüche,
**dadurch gekennzeichnet, dass**
das Inkrementieren des Zählerstands auch für eine weitere Aufteilung des Mehrdeutigkeitsintervalls erfolgt, insbesondere für eine hinsichtlich einer Zuordnung zur Distanz um eine halbe Breite der Zelle (5) verschobene Aufteilung.

11. Verfahren nach einem der vorangehenden Ansprüche,
**dadurch gekennzeichnet, dass**
die Zählerstandverteilung nach oder während des Inkrementierens mit einem Faltungskern, gegebenenfalls mehrfach, gefaltet wird, insbesondere mit Splines der Ordnung 1 oder 2.

**12.** Verfahren nach einem der vorangehenden Ansprüche,
**dadurch gekennzeichnet, dass**
das Inkrementieren unter Berücksichtigung von Konfidenzwerten für die Einzelobjektphasen $\varphi_{ij}$ erfolgt, insbesondere unter Berücksichtigung eines Signal-Rausch-Verhältnisses für die Einzelobjektphasen $\varphi_{ij}$.

**13.** Verfahren nach einem der vorangehenden Ansprüche,
**dadurch gekennzeichnet, dass**
beim Aufteilen des Mehrdeutigkeitsintervalls mehrere Aufteilungen in Zellen (5) definierter Breite als Häufigkeitstabellen erzeugt werden, wobei jede Häufigkeitstabelle einem Zeitraum zugeordnet wird und in jedem Zeitraum die zugehörigen Einzelobjektphasen $\varphi_{ij}$ in die dem Zeitraum zugeordnete Häufigkeitstabelle einsortiert werden.

**14.** Computerprogrammprodukt mit Programmcode, der auf einem maschinenlesbaren Träger gespeichert oder durch eine elektromagnetische Welle verkörpert ist, zur Durchführung des Verfahrens nach einem der Ansprüche 1 bis 13, wenn das Programm in einem Computer ausgeführt wird.

**15.** Computerprogrammprodukt nach Anspruch 14,
**dadurch gekennzeichnet, dass**
eine Gesamtheit der Zellen (5) durch eine Häufigkeitstabelle repräsentiert ist, insbesondere durch eine der folgenden Datenstrukturen

- Feld,
- binärer Suchbaum,
- Hash-Tabelle,
- Skip-Listen,
- Tries.

**16.** Distanzmesser mit

o wenigstens einer Signalquelle (1) zur Erzeugung und Aussendung eines periodischen Signals (2,7), insbesondere einer Laserquelle, wobei das Signal (2,7) wenigstens $J \geq 2$, insbesondere aufmodulierte, Wellenlängen $\lambda_j$ mit $1 \leq j \leq J$ aufweist;
o einem Empfänger (4) zum Empfangen eines reflektierten Signals (7a,7c) und zur Ableitung einer Phase $\varphi_j$ für jede der Wellenlängen $\lambda_j$ aus dem empfangenen Signal; und
o einer Auswerteelektronik zur Auflösung von Phasenmehrdeutigkeiten;

**dadurch gekennzeichnet, dass**
die Auswertelektronik eine zur Durchführung des Verfahrens nach einem der Ansprüche 1 bis 13 ausgebildete Schaltlogik mit parallelisierter Datenverarbeitung aufweist, insbesondere einen anwendungsspezifischen integrierten Schaltkreis.

## Claims

**1.** Method for multi-target enabled resolution of phase ambiguities, having at least

• an emission of a periodic signal (2,7), in particular in the form of a light or sound wave, onto at least two objects (3a,3b) within an ambiguity interval, where the signal (2) comprises at least $J \geq 2$ wavelengths $\lambda_j$, in particular modulated thereon, with $1 \leq j \leq J$,
• a reception of the signal (7a,7c) reflected by the objects (3a,3b),
• a derivation of the phases $\Phi_j$ as a phase shift for each of the wavelengths $\lambda_j$ from the received signal;
**characterized by**
• a decomposition into the single object phases $\Phi_{ij}$ associated with the $I \geq 2$ objects (3a,3b), with $1 \leq i \leq I$,
• a partitioning of the ambiguity interval into cells (5) of defined width, a counter reading and a distance being assigned to each cell (5) and a counter reading distribution being derivable,
• incrementing of the counter reading for the cells (5) which are assigned to the possible object distance $R_N(\Phi_{ij}) = \Phi_{ij}/2\pi \cdot \lambda_j/2 + N \cdot \lambda_j/2$, said incrementing being carried out for the $N \in \boldsymbol{N}$ which can be assigned to the ambiguity interval as a running periodicity variable, in particular for all $N \in \mathbf{N}$ which can be assigned to the ambiguity interval, and for all single object phases $\Phi_{ij}$,

• determination of an absolute object phase and/or a true object distance for at least one of the objects (3a,3b).

**2.** Method according to Claim 1,
   **characterized in that**
   for the possible object distance assigned to a respective $N \in \mathbf{N}$ and a respective single object phase $\Phi_{ij}$ the counter reading is incremented for more than one cell (5), in particular by using a weighting function.

**3.** Method according to Claim 1 or 2,
   **characterized in that**
   the counter reading is incremented for the cells (5) which are assigned to combinations of a T-tuple of phases $\Phi_{ij}$ with $T \leq J$, in particular for the two-tuples with T=2 and an incrementing of the counter reading for the

$$\frac{\varphi_{ij_1}}{2\pi}\lambda_{j_1} + N_{j_1}\lambda_{j_1} \approx \frac{\varphi_{ij_2}}{2\pi}\lambda_{j_2} + N_{j_2}\lambda_{j_2}$$ associated cells (5), where $j_1 \neq 0$ $j_2$ and $j_1, j_2 \leq J$.

**4.** Method according to any one of the preceding claims,
   **characterized in that**
   the counter reading is incremented using a Laning method.

**5.** Method according to any one of the preceding claims,
   **characterized in that**
   the absolute phase and/or the true object distance to one of the objects is determined by identification of the highest counter reading.

**6.** Method according to Claim 5,
   **characterized in that**
   one or a plurality of the currently highest counter readings is continuously logged.

**7.** Method according to any one of the preceding claims,
   **characterized in that**
   the absolute phases and/or the true object distances to the objects (3a,3b) are determined on the basis of an evaluation of the counter reading distribution, in particular by the identification of maxima that can be assigned to the objects (3a,3b).

**8.** Method according to any one of the preceding claims,
   **characterized in that**
   a rough search is made to determine parameters, in particular to optimise the choice of the width of the cells (5).

**9.** Method according to any one of the preceding claims,
   **characterized in that**
   the width of the cells (5) is selected on the basis of a predetermined measurement accuracy and/or with a multiple resolution.

**10.** Method according to any one of the preceding claims,
   **characterized in that**
   the counter reading is also incremented for a further partitioning of the ambiguity interval, in particular for a partitioning which is shifted by half the width of the cell (5) with respect to an assignment to the distance.

**11.** Method according to any one of the preceding claims,
   **characterized in that**
   during or after the incrementing, the counter reading distribution is convolved with a convolution kernel, where necessary multiple times, in particular with splines of order 1 or 2.

**12.** Method according to any one of the preceding claims,
   **characterized in that**

the incrementing takes place taking account of the confidence values of the single object phases $\Phi_{ij}$, in particular taking account of a signal-to-noise ratio for the single object phases $\Phi_{ij}$.

13. Method according to any one of the preceding claims,
   **characterized in that**
   during partitioning of the ambiguity interval a plurality of partitions into cells (5) of defined width are generated as frequency tables, with each frequency table being assigned to one period and in each period the associated single object phases $\Phi_{ij}$ being sorted into the frequency table assigned to said period.

14. Computer program product with program code, which is stored on a machine-readable medium or embodied by an electromagnetic wave, for carrying out the method according to any one of Claims 1 to 13, when the program is executed in a computer.

15. Computer program product according to Claim 14,
   **characterized in that**
   a totality of the cells (5) is represented by a frequency table, in particular by one of the following data structures

   - field,
   - binary search tree,
   - hash table,
   - skip-lists,
   - tries.

16. Range-finder having

   o at least one signal source (1) for generating and emitting a periodic signal (2,7), in particular of a laser source, where the signal (2,7) comprises at least $J \geq 2$ wavelengths $\lambda_j$, in particular modulated thereon, with $1 \leq j \leq J$;
   o a receiver (4) for receiving a reflected signal (7a,7c) and for deriving a phase $\Phi_j$ for each of the wavelengths $\lambda_j$ from the received signal; and
   o a set of evaluation electronics for resolving phase ambiguities;

   **characterized in that**
   the evaluation electronics comprises a circuit logic with parallel data processing for carrying out the method according to any one of Claims 1 to 13, in particular an application-specific integrated circuit.

**Revendications**

1. Procédé pour la résolution multicible d'ambiguïtés de phase, avec au moins :

   • une émission d'un signal (2, 7) périodique, en particulier se présentant sous forme d'onde lumineuse ou acoustique, sur au moins deux objets (3a, 3b) se trouvant dans les limites d'un intervalle d'ambiguïté, le signal (2) présentant au moins $J \geq 2$ longueurs d'ondes $\lambda_j$, en particulier modulées, avec $1 \leq j \leq J$,
   • une réception du signal (7a, 7c) réfléchi par les objets (3a, 3b),
   • une dérivation des phases $\Phi_j$ à titre de déphasage pour chacune des longueurs d'ondes $\lambda_j$, à partir du signal reçu ;
   **caractérisé par**
   • une décomposition des phases d'objet individuel $\phi_{ij}$ associées dans les $I \geq 2$ objets (3a, 3b), avec $1 \leq i \leq I$,
   • une distribution de l'intervalle d'ambiguïté en cellules (5) de largeur définie, à chaque ligne (5) étant associé un état de compteur et une distance et une distribution d'états de compteurs étant susceptible d'être dérivée,
   • une incrémentation de l'état de compteur pour les cellules (5) qui sont associées à la distance d'objet $R_N$ ($\phi_{ij}$) = $\phi ij/2\pi \cdot \lambda_j / 2 + N \cdot \lambda_j / 2$ possible, l'incrémentation s'effectuant pour $N \in \mathbf{N}$, associable à l'intervalle d'ambiguïté, en tant que variable courante de périodicité, en particulier pour tous les $N \in \mathbf{N}$ associables à l'intervalle d'ambiguïté, et pour toutes les phases d'objet individuel $\phi_{ij}$,
   • une détermination d'une phase d'objet absolu et/ou d'une distance d'objet vraie pour au moins l'un des objets (3a, 3b).

2. Procédé selon la revendication 1,

**caractérisé en ce que**,
pour la distance d'objet possible, associée à un N ∈ **N** respectif et à une phase d'objet individuel φ<sub>ij</sub> respective, est effectuée une incrémentation de l'état de compteur pour plus d'une cellule (5), en particulier en utilisant une fonction de pondération.

3. Procédé selon la revendication 1 ou 2,
**caractérisé en ce que**
l'incrémentation de l'état de compteur s'effectue pour les cellules (5) associées à des combinaisons d'un tuple de type T composé de phases φ<sub>ij</sub>, avec $T \leq J$, en particulier pour les tuples doubles avec T = 2 et une incrémentation de l'état de compteur pour les

$$\frac{\varphi_{ij_1}}{2\pi}\,\lambda_{j_1} + N_{j_1}\,\lambda_{j_1} \approx \frac{\varphi_{ij_2}}{2\pi}\,\lambda_{j2} + N_{j2}\,\lambda_{j_2}$$ cellules (5) associées, sachant que $j_1 \neq j_2$ et $j_1, j_2 \leq J$.

4. Procédé selon l'une quelconque des revendications précédentes,
**caractérisé en ce que**
l'incrémentation de l'état de compteur s'effectue en utilisant une méthode de Laning.

5. Procédé selon l'une quelconque des revendications précédentes,
**caractérisé en ce que**
la détermination de la phase absolue et/ou de la distance d'objet vraie par rapport à l'un des objets s'effectue par identification de l'état de compteur le plus élevé.

6. Procédé selon la revendication 5,
**caractérisé en ce qu'**
un ou plusieurs des états de compteur actuellement les plus élevés sont en continu l'objet d'un enregistrement dans un procès verbal.

7. Procédé selon l'une quelconque des revendications précédentes,
**caractérisé en ce que**
la détermination des phases absolues et/ou des distances d'objet vraies par rapport aux objets (3a, 3b) s'effectue à l'aide d'une évaluation de la distribution d'états de compteur, en particulier par l'identification de maxima susceptibles d'être associés aux objets (3a, 3b).

8. Procédé selon l'une quelconque des revendications précédentes,
**caractérisé en ce qu'**
une recherche grossière est accomplie pour la détermination de paramètres, en particulier pour l'optimisation du choix de la largeur des cellules (5).

9. Procédé selon l'une quelconque des revendications précédentes,
**caractérisé en ce que**
la largeur des cellules (5) est choisie en fonction d'une précision de mesure prédéterminée et/ou avec une résolution multiple.

10. Procédé selon l'une quelconque des revendications précédentes,
**caractérisé en ce que**
l'incrémentation de l'état de compteur s'effectue également pour une subsidiaire distribution de l'intervalle d'ambiguïté, en particulier pour une distribution décalée d'une demi largeur de la cellule (5) eu égard à une association par rapport à la distance.

11. Procédé selon l'une quelconque des revendications précédentes,
**caractérisé en ce que**
la distribution d'états de compteurs est accomplie, le cas échéant plusieurs fois, après ou pendant l'incrémentation avec un coeur de déploiement, en particulier avec des fonctions splines d'ordre 1 ou 2.

12. Procédé selon l'une quelconque des revendications précédentes,
**caractérisé en ce que**

l'incrémentation est effectuée en prenant en considération des valeurs de confiance pour les phases d'objet individuel $\phi_{ij}$, en particulier en prenant en considération un rapport signal-bruit pour les phases d'objet individuel $\phi_{ij}$.

**13.** Procédé selon l'une quelconque des revendications précédentes,
**caractérisé en ce que**,
lors de la distribution de l'intervalle d'ambiguïté, plusieurs distributions dans des cellules (5) de largeur définie, à titre de table de fréquences, sont générées, chaque table de fréquences étant associée à une période de temps et, dans chaque période de temps, les phases d'objet individuel $\phi_{ij}$ afférentes sont classées dans la table de fréquences associée à la période de temps.

**14.** Produit-programme informatique, avec un code de programme, mémorisé sur un support lisible par une machine ou matérialisé par une onde électromagnétique, pour la mise en oeuvre du procédé selon l'une des revendications 1 à 13, lorsque le programme est exécuté dans un ordinateur.

**15.** Produit-programme informatique selon la revendication 14,
**caractérisé en ce qu'**
une totalité des cellules (5) est représentée par une table de fréquences, en particulier par l'une des structures de données suivantes :

- champ,
- arbre de recherche binaire,
- table de hachage,
- listes d'exceptions,
- tentatives.

**16.** Télémètre, comprenant :

o au moins une source de signal (1) pour générer et envoyer un signal (2, 7) périodique, en particulier une source laser, le signal (2, 7) présentant au moins $J \geq 2$ longueurs d'ondes $\lambda_j$, en particulier modulées, avec $1 \leq j \leq J$ ;
o un récepteur, pour recevoir un signal (7a, 7c) réfléchi et pour dériver une phase $\phi_j$ pour chacune des longueurs d'ondes $\lambda_j$, à partir du signal reçu ; et
o une électronique d'évaluation, pour résoudre des ambiguïtés de phase ;

**caractérisé en ce que**
l'électronique d'évaluation présente une logique de commutation, réalisée pour mettre en oeuvre le procédé selon l'une des revendications 1 à 13, avec traitement de données parallélisé, en particulier un circuit intégré, spécifique à l'application.

Fig. 1a

Fig. 1b

Fig. 2

Fig. 3

Fig. 4

Fig. 5

Fig. 6

$$2\pi + \pi + \pi/4 = (13\pi)/4$$
$$2\pi + 2\pi + 2\pi + \pi/2 = (26\pi)/4$$

Fig. 7

*Fig.* 8

*Fig.* 9

*Fig.* 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004074773 A
- EP 1450128 A
- US 4537502 A
- EP 05107764 A
- EP 2006008184 W

**In der Beschreibung aufgeführte Nicht-Patentliteratur**

- **J. M. RÜEGER.** Electronic Distance Measurement. Springer, 1996
- **R. JOECKEL ; M. STOBER.** Elektronische Entfernungs- und Richtungsmessung. Verlag Konrad Wittwer, 1999
- **JOECKEL ; STOBER.** Impuls-Laufzeitmessung
- **ROBERT SEDGEWICK.** Algorithms in C, Parts 1-4: Fundamentals, Data Structures, Sorting, Searching. Addison Wesley, 1998